# EUROPEAN PATENT SPECIFICATION

(11) **EP 4 411 293 B1**
(45) Date of publication and mention of the grant of the patent: **10.12.2025**
(21) Application number: 22874283.9
(22) Date of filing: 13.06.2022
(51) Int. Cl.: F25D 29/00

(54) **FREEZING PARAMETER ADJUSTMENT METHOD AND DEVICE FOR DUAL-SYSTEM REFRIGERATOR**
GEFRIERPARAMETERANPASSUNGSVERFAHREN UND -VORRICHTUNG FÜR DOPPELSYSTEMKÜHLSCHRANK
PROCÉDÉ ET DISPOSITIF DE RÉGLAGE DE PARAMÈTRE DE CONGÉLATION POUR RÉFRIGÉRATEUR À DOUBLE SYSTÈME

(30) Priority: 29.09.2021 CN 202111153640
(43) Date of publication of application: 07.08.2024
(73) Proprietor: QINGDAO HAIER REFRIGERATOR CO., LTD., Qingdao, Shandong 266101 (CN); HAIER SMART HOME CO., LTD., Qingdao, Shandong 266101 (CN)
(72) Inventor: SONG, Qingbo, Qingdao, Shandong 266101 (CN); WANG, Dong, Qingdao, Shandong 266101 (CN); LIU, Min, Qingdao, Shandong 266101 (CN)
(74) Representative: Winter, Brandl - Partnerschaft mbB
(86) International application number: PCT/CN2022/098434
(87) International publication number: WO 2023/050886

(56) References cited:
- CN-A- 1 758 001
- CN-A- 105 091 493
- CN-A- 105 526 762
- CN-A- 113 154 789
- CN-A- 113 154 789
- CN-A- 113 587 521
- JP-A- H08 285 431
- US-B2- 9 140 478

## Description

### TECHNICAL FIELD

The present application relates to the field of dual-system refrigerator technology, and more particularly to a method and device for adjusting freezing parameters in a dual-system refrigerator.

### BACKGROUND

Currently, dual-system refrigerators have an optimal refrigeration control, where the refrigerating compartment cools first. When a temperature of a refrigerating compartment reaches a refrigeration shutdown point, a temperature of a freezing compartment is just between a freezing start point and a freezing shutdown point. A solenoid valve then switches to a freezing capillary tube, and the freezing compartment continues to cool until it reaches a freezing shutdown point, after which a compressor is turned off. This ensures highest overall refrigeration cycle efficiency with lowest energy consumption.

To achieve an above objective, for each freezing level, technicians usually set a group of freezing start temperatures and freezing shutdown temperatures. If the temperature of the refrigerating compartment reaches the refrigeration shutdown point but the temperature of the freezing compartment is not between the set freezing start temperature and the freezing shutdown temperature, technicians continuously adjust the freezing start temperature and freezing shutdown temperature until the temperature of the refrigerating compartment is at the refrigeration shutdown point and the temperature of the freezing compartment is between the freezing start temperature and freezing shutdown temperature. This process is labor-intensive and costly.

US 9 140 478 B2, CN 105 091 493 A, CN 113 154 789 A disclose prior art methods for controlling freezing temperature operational parameters.

### SUMMARY

An objective of the present application is to provide a method that can automatically adjust freezing parameters of a dual-system refrigerator. The method of the invention is defined by the wordings of claim 1. Further embodiments are defined by the appended dependent claims.

A further objective of the present application is to quickly determine a freezing start temperature and a freezing shutdown temperature for each freezing level of a dual-system refrigerator.

Another objective of the present application is to provide a device for adjusting freezing parameters.

Particularly, the present application provides a method for adjusting freezing parameters in a dual-system refrigerator, comprising:
obtaining a temperature of a refrigerating compartment after a compressor is activated, and obtaining a temperature of a freezing compartment and determine whether the temperature of the freezing compartment is within a predetermined temperature range related to a target freezing level, where a lower endpoint of the temperature range is a predetermined freezing shutdown temperature and an upper endpoint of the temperature range is a predetermined freezing start temperature, when the temperature of the refrigerating compartment is less than or equal to a refrigeration shutdown temperature;
if the temperature of the freezing compartment is not within the predetermined temperature range related to the target freezing level, expanding the temperature range according to predetermined rules, controlling conduction of a freezing capillary tube and/or shutdown of the compressor based on the temperature of the freezing compartment, until the temperature of the freezing compartment is less than or equal to the refrigeration shutdown temperature, the temperature of the freezing compartment is within a most recently determined temperature range, and determine a lower endpoint of the most recently determined temperature range as a target freezing shutdown temperature for a target freezing level and determine an upper endpoint of the most recently determined temperature range as a target freezing start temperature for the target freezing level.

In an embodiment of the present application, a step of expanding the temperature range according to predetermined rules comprises:
expanding the most recently determined temperature range based on the temperature of the freezing compartment when the temperature of the refrigerating compartment is less than or equal to the refrigeration shutdown temperature and the temperature of the freezing compartment is not within the most recently determined temperature range.

In an embodiment of the present application, a step of expanding the most recently determined temperature range based on the temperature of the freezing compartment comprises:
increasing a most recently determined freezing start temperature and decreasing a most recently determined freezing shutdown temperature based on the temperature of the freezing compartment.

In an embodiment of the present application, a step of increasing a most recently determined freezing start temperature and decreasing a most recently determined freezing shutdown temperature based on the temperature of the freezing compartment comprises:
determining the temperature of the freezing compartment as a current freezing start temperature if the temperature of the freezing compartment is greater than or equal to the most recently determined freezing start temperature, and decreasing the most recently determined freezing shutdown temperature according to the temperature of the freezing compartment and the most recently determined freezing start temperature to obtain a current freezing shutdown temperature;
determining the temperature of the freezing compartment as a current freezing shutdown temperature if the temperature of the freezing compartment is less than or equal to the most recently determined freezing shutdown temperature, and increasing the most recently determined freezing start temperature according to the temperature of the freezing compartment and the most recently determined freezing shutdown temperature to obtain a current freezing start temperature.

In an embodiment of the present application, a step of decreasing the most recently determined freezing shutdown temperature according to the temperature of the freezing compartment and the most recently determined freezing start temperature to obtain a current freezing shutdown temperature comprises:
determining the current freezing shutdown temperature according to F_{off(n)}=F_{off(n-1)}- | F-Fₒₙ₍ₙ₋₁₎ | ,
where F_{off(n)} is a freezing shutdown temperature for an nth instance, F_{off(n-1)} is a determined freezing shutdown temperature for an (n-1)th instance, F is the temperature of the freezing compartment, and Fₒₙ₍ₙ₋₁₎ is a determined freezing start temperature for an (n-1)th instance.

In an embodiment of the present application, a step of increasing the most recently determined freezing start temperature according to the temperature of the freezing compartment and the most recently determined freezing shutdown temperature to obtain a current freezing start temperature comprises:
determining the current freezing start temperature according to Fₒₙ₍ₙ₎₌Fₒₙ₍ₙ₋₁₎+ | F- F_{off(n-1)} | ,
where Fₒₙ₍ₙ₎ is a freezing start temperature for an nth instance, Fₒₙ₍ₙ₋₁₎ is a determined freezing start temperature for an (n-1)th instance, F is the temperature of the freezing compartment, and F_{off(n-1)} is a determined freezing shutdown temperature for an (n-1)th instance.

In an embodiment of the present application, a step of controlling conduction of a freezing capillary tube and/or shutdown of the compressor based on the temperature of the freezing compartment comprises: if the temperature of the freezing compartment is greater than or equal to the most recently determined freezing shutdown temperature, conducting the freezing capillary tube until the temperature of the freezing compartment is less than the determined current freezing shutdown temperature, and shutting down the compressor; and
if the temperature of the freezing compartment is less than or equal to the most recently determined freezing start temperature, shutting down the compressor.

In an embodiment of the present application, conditions for starting the compressor comprise:
the temperature of the refrigerating compartment being greater than or equal to a refrigeration start temperature; or
the temperature of the refrigerating compartment being between a refrigeration start temperature and the refrigeration shutdown temperature, and the temperature of the freezing compartment being greater than or equal to the most recently determined freezing start temperature.

In an embodiment of the present application, a step of obtaining a temperature of a refrigerating compartment comprises: obtaining a temperature of the refrigerating compartment detected by a temperature detection device set inside the refrigerating compartment; and
a step of obtaining a temperature of a freezing compartment comprises: obtaining a temperature of the freezing compartment detected by a freezing temperature detection device set inside the freezing compartment.

In accordance with another aspect of the present application, the present application further provides a device for adjusting freezing parameters, comprising a memory and a processor, wherein the memory stores a computer program, which, when executed by the processor, implements a method for adjusting freezing parameters of a dual-system refrigerator according to any of the aforementioned technical solutions.

The present application provides a method and device for adjusting freezing parameters in a dual-system refrigerator. In the method provided by the present application, after a compressor is started and a temperature of a refrigerating compartment is obtained, if the temperature of the refrigerating compartment is less than or equal to a refrigeration shutdown temperature, obtain and determine whether a temperature of a freezing compartment is within a predetermined temperature range related to a target freezing level, where endpoints of the temperature range are separately a predetermined freezing shutdown temperature and a predetermined freezing start temperature. If not, the temperature range is expanded according to predetermined rules, and based on the temperature of the freezing compartment, conduction of a freezing capillary tube and/or shutdown of the compressor are/is controlled until the temperature of the freezing compartment is less than or equal to the refrigeration shutdown temperature, and the temperature of the freezing compartment is within a most recently determined temperature range. The endpoints of this temperature range are then set as a target freezing shutdown temperature and a target freezing start temperature for the target freezing level. This technical solution provided by the present application automatically adjusts the temperature range to determine the target freezing start temperature and the target freezing shutdown temperature for the target freezing level, thereby saving labor and reducing costs.

Furthermore, whenever the temperature of the refrigerating compartment is less than or equal to the refrigeration shutdown temperature and the temperature of the freezing compartment is not within the most recently determined temperature range, the temperature range is expanded based on the temperature of the freezing compartment, thus quickly determining the target freezing shutdown temperature and the target freezing start temperature for the target freezing level.

The above description is only an overview of the technical solutions of the present application. To understand the technical means of the present application more clearly, it can be implemented according to the content of the specification, and to make the above and other objectives, features, and advantages of the present application more understandable, specific embodiments of the present application are hereby cited.

The detailed description of the specific embodiments of the present application, combined with the drawings below, will make the aforementioned and other objectives, advantages, and features of the present application clearer to those skilled in the art.

As used herein, except where the context clearly requires otherwise, the term "comprise" and variations of the term, such as "comprising", "comprises" and "comprised", are not intended to exclude further features, components, integers or steps.

### BRIEF DESCRIPTION OF THE DRAWINGS

The subsequent text will describe some specific embodiments of the present application in a detailed but non-limiting manner with reference to drawings. The same reference numerals in the drawings denote the same or similar parts or components. It should be understood by those skilled in the art that these drawings are not necessarily drawn to scale. In the drawings:
FIG.1 shows a schematic diagram of a refrigeration principle of a dual-system refrigerator according to an embodiment of the present application.
FIG.2 shows a flowchart illustrating a method for adjusting freezing parameters of a dual-system refrigerator according to an embodiment of the present application.
FIG.3 shows a complete flowchart illustrating the method for adjusting freezing parameters of a dual-system refrigerator according to an embodiment of the present application.
FIG.4 shows a schematic structural diagram of a freezing parameter adjustment device according to an embodiment of the present application.

### DETAILED DESCRIPTION

Exemplary embodiments of the present disclosure are described in more detail below with reference to drawings. Although the exemplary embodiments of the present disclosure are shown in the drawings, it should be understood that the present disclosure can be implemented in various forms and should not be limited to the embodiments set forth herein. Instead, these embodiments are provided to convey a more thorough understanding of this disclosure and to fully communicate the scope of the present disclosure to those skilled in the art.

It should be noted that technical features in the embodiments of the present application and optional embodiments can be combined with each other without conflict.

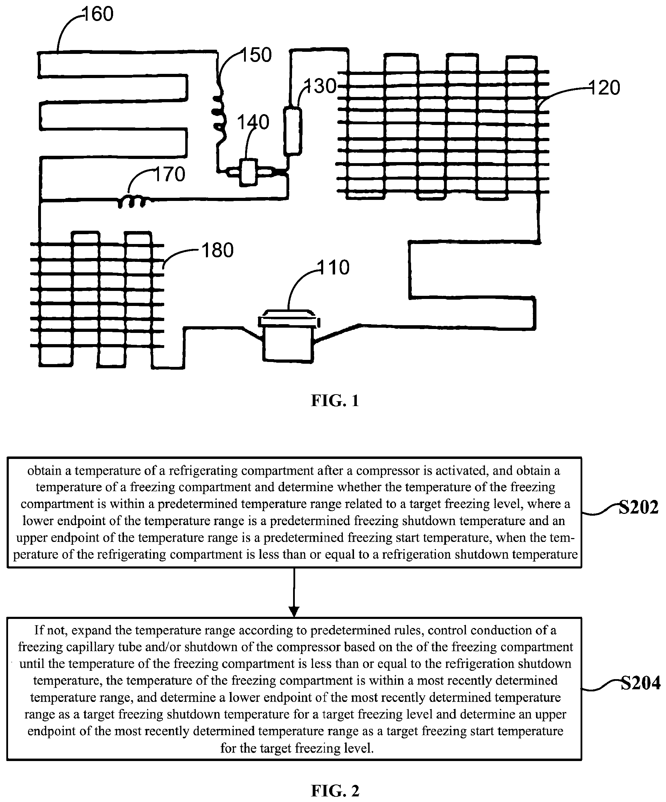

FIG.1 shows a schematic diagram of a refrigeration principle of a dual-system refrigerator according to an embodiment of the present application. Referring to FIG.1, the dual-system refrigerator comprises a compressor 110, a condenser 120, a drying filter 130, a solenoid valve 140, a refrigerating capillary tube 150, a freezing capillary tube 170, a refrigerating evaporator 160 for cooling a refrigerating compartment, and a freezing evaporator 180 for cooling a freezing compartment. The compressor 110, condenser 120, and drying filter 130 are connected in sequence. The drying filter 130 is also connected to the refrigerating evaporator 160 via the refrigerating capillary tube 150 and connected to the freezing evaporator 180 via the freezing capillary tube 170. The refrigerating evaporator 160 and the freezing evaporator 180 are connected, and the freezing evaporator 180 is also connected to the compressor 110. The solenoid valve 140, which can be a three-way valve, is positioned between the drying filter 130, the refrigerating capillary tube 150, and the freezing capillary tube 170. In one conduction state of the solenoid valve 140, the refrigerating capillary tube 150 is conducted, and the refrigerating evaporator 160 and the freezing evaporator 180 are in series, cooling both the refrigerating compartment and the freezing compartment together. In another conduction state of the solenoid valve 140, the freezing capillary tube 170 is conducted, and the freezing evaporator 180 and the compressor 110 are in series, cooling only the freezing compartment. The refrigerating capillary tube 150 and the freezing capillary tube 170 cannot be conducted simultaneously.

FIG.2 shows a flowchart illustrating a method for adjusting freezing parameters of a dual-system refrigerator according to an embodiment of the present application. Referring to FIG.2, the method can comprise at least a following step S202 and a following step S204.

Step S202: obtain a temperature of a refrigerating compartment after a compressor 110 is activated, and obtain a temperature of a freezing compartment and determine whether the temperature of the freezing compartment is within a predetermined temperature range related to a target freezing level, where a lower endpoint of the temperature range is a predetermined freezing shutdown temperature and an upper endpoint of the temperature range is a predetermined freezing start temperature, when the temperature of the refrigerating compartment is less than or equal to a refrigeration shutdown temperature.

Step S204: If the temperature of the freezing compartment is not within the predetermined temperature range related to the target freezing level, expand the temperature range according to predetermined rules, control conduction of a freezing capillary tube and/or shutdown of the compressor 110 based on the temperature of the freezing compartment until the temperature of the freezing compartment is less than or equal to the refrigeration shutdown temperature, the temperature of the freezing compartment is within a most recently determined temperature range, and determine a lower endpoint of the most recently determined temperature range as a target freezing shutdown temperature for a target freezing level and determine an upper endpoint of the most recently determined temperature range as a target freezing start temperature for the target freezing level.

For obtaining the temperature of the refrigerating compartment, a temperature of the refrigerating compartment detected by a temperature detection device set inside the refrigerating compartment can be obtained. For obtaining the temperature of the freezing compartment, a temperature of the freezing compartment detected by a freezing temperature detection device set inside the freezing compartment can be obtained. The temperature detection device can be a temperature sensor, an infrared thermometer, or other similar devices.

In one embodiment of the present application, after the compressor 110 is started and the temperature of the refrigerating compartment is obtained, if the temperature of the refrigerating compartment is less than or equal to the refrigeration shutdown temperature, obtain and determine whether the temperature of the freezing compartment is within a predetermined temperature range related to the target freezing level, where the endpoints of the temperature range are the predetermined freezing shutdown temperature and the predetermined freezing start temperature, separately. If not, the temperature range is expanded according to predetermined rules, and based on the temperature of the freezing compartment, the conduction of the freezing capillary tube and/or the shutdown of the compressor 110 are/is controlled until the temperature of the freezing compartment is less than or equal to the refrigeration shutdown temperature, and the temperature of the freezing compartment is within the most recently determined temperature range, and the endpoints of this temperature range are set as the target freezing shutdown temperature and the target freezing start temperature for the target freezing level. This technical solution provided by the present application automatically adjusts the temperature range to determine the target freezing start temperature and the target freezing shutdown temperature for the target freezing level, thereby saving labor and reducing costs.

In an embodiment of the present application, the expansion of the temperature range according to predetermined rules in step S204 can comprise: expanding the most recently determined temperature range based on the temperature of the freezing compartment when the temperature of the refrigerating compartment is less than or equal to the refrigeration shutdown temperature and the temperature of the freezing compartment is not within the most recently determined temperature range.

Specifically, expanding the most recently determined temperature range based on the temperature of the freezing compartment comprises: increasing a most recently determined freezing start temperature and decreasing a most recently determined freezing shutdown temperature based on the temperature of the freezing compartment.

If a current instance is a first time, the most recently determined temperature range is the predetermined temperature range, and the most recently determined freezing start temperature and the most recently determined freezing shutdown temperatures are the predetermined freezing start temperature and the predetermined shutdown temperature.

By increasing the most recently determined freezing start temperature and decreasing the most recently determined freezing shutdown temperature based on the temperature of the freezing compartment, it can be quick to determine the target freezing shutdown temperature and the target freezing start temperature for the target freezing level.

In an embodiment of the present application, the process of increasing the most recently determined freezing start temperature and decreasing the most recently determined freezing shutdown temperature based on the temperature of the freezing compartment can comprise: determining the temperature of the freezing compartment as a current freezing start temperature if the temperature of the freezing compartment is greater than or equal to the most recently determined freezing start temperature, and decreasing the most recently determined freezing shutdown temperature according to the temperature of the freezing compartment and the most recently determined freezing start temperature to obtain a current freezing shutdown temperature; determining the temperature of the freezing compartment as a current freezing shutdown temperature if the temperature of the freezing compartment is less than or equal to the most recently determined freezing shutdown temperature, and increasing the most recently determined freezing start temperature according to the temperature of the freezing compartment and the most recently determined freezing shutdown temperature to obtain a current freezing start temperature.

Specifically, the process of decreasing the most recently determined freezing shutdown temperature according to the temperature of the freezing compartment and the most recently determined freezing start temperature to obtain the current freezing shutdown temperature can comprise: determining the current freezing shutdown temperature according to F_{off(n)}=F_{off(n-1)}- | F-Fₒₙ₍ₙ₋₁₎ | , where F_{off(n)} is a freezing shutdown temperature for an nth instance as the current freezing shutdown temperature, F_{off(n-1)} is a determined freezing shutdown temperature for an (n-1)th instance as the most recently determined freezing shutdown temperature, F is the temperature of the freezing compartment, and Fₒₙ₍ₙ₋₁₎ is a determined freezing start temperature for an (n-1)th instance as the most recently determined freezing start temperature.

Additionally, the process of increasing the most recently determined freezing start temperature according to the temperature of the freezing compartment and the most recently determined freezing shutdown temperature to obtain the current freezing start temperature can comprise: determining the current freezing start temperature according to Fₒₙ₍ₙ₎₌Fₒₙ₍ₙ₋₁₎+ | F-F_{off(n-1)} | , where Fₒₙ₍ₙ₎ is a freezing start temperature for an nth instance as the current freezing start temperature.

By adjusting the freezing shutdown temperature and the freezing start temperature according to the above algorithm, it can be quick to determine the target freezing shutdown temperature and the target freezing start temperature for the target freezing level.

In an embodiment of the present application, the control of the conduction of the freezing capillary tube and/or the shutdown of the compressor 110 based on the temperature of the freezing compartment in step S204 can comprise: if the temperature of the freezing compartment is greater than or equal to the most recently determined freezing shutdown temperature, conducting the freezing capillary tube until the temperature of the freezing compartment is less than the determined current freezing shutdown temperature, and shutting down the compressor 110; and if the temperature of the freezing compartment is less than or equal to the most recently determined freezing start temperature, shutting down the compressor 110. According to the control above, it allows for quickly determining the target freezing shutdown temperature and the target freezing start temperature for the target freezing level.

In an embodiment of the present application, conditions for starting the compressor 110 comprise: the temperature of the refrigerating compartment being greater than or equal to a refrigeration start temperature; or the temperature of the refrigerating compartment being between a refrigeration start temperature and the refrigeration shutdown temperature, and the temperature of the freezing compartment being greater than or equal to the most recently determined freezing start temperature.

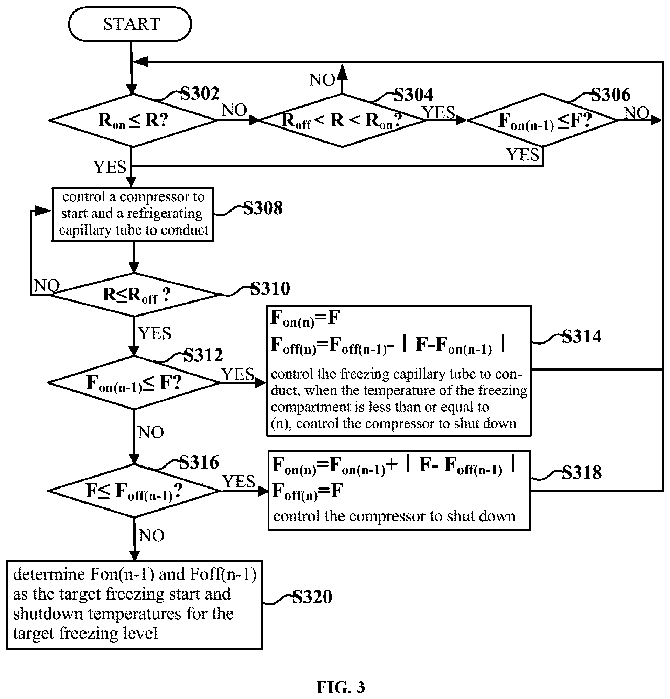

FIG.3 shows a complete flowchart illustrating the method for adjusting freezing parameters of a dual-system refrigerator according to an embodiment of the present application. To make the technical solutions of the present application clearer and more understandable, the method for adjusting freezing parameters in a dual-system refrigerator is explained more completely and comprehensively with reference to FIG.3. As shown in FIG.3, the method can comprise at least the following steps S302-S320:

Step S302: Obtain a temperature R of a refrigerating compartment of a dual-system refrigerator and determine whether the temperature R is greater than or equal to a refrigeration start temperature Rₒₙ; if the temperature R is not greater than or equal to the refrigeration start temperature Rₒₙ, proceed to step S304; if the temperature R is greater than or equal to the refrigeration start temperature Rₒₙ, proceed to step S308.

Step S304: Determine whether the temperature R of the refrigerating compartment is greater than a refrigeration shutdown temperature R_{off} and less than the refrigeration start temperature Rₒₙ; if the temperature R of the refrigerating compartment is greater than the refrigeration shutdown temperature R_{off} and less than the refrigeration start temperature Rₒₙ, proceed to step S306; if the temperature R of the refrigerating compartment is not greater than the refrigeration shutdown temperature R_{off} and less than the refrigeration start temperature Rₒₙ, return to step S302.

Step S306: Determine whether a temperature F of the freezing compartment is greater than or equal to a most recently determined freezing start temperature Fₒₙ₍ₙ₋₁₎; if the temperature F of the freezing compartment is greater than or equal to the most recently determined freezing start temperature Fₒₙ₍ₙ₋₁₎, proceed to step S308; if the temperature F of the freezing compartment is not greater than or equal to the most recently determined freezing start temperature Fₒₙ₍ₙ₋₁₎, return to step S302.

Step S308: Control a compressor 110 to start and a refrigerating capillary tube 150 to conduct, and proceed to step S310.

Step S310: Determine whether the temperature R of the refrigerating compartment is less than or equal to the refrigeration shutdown temperature R_{off}; if the temperature R of the refrigerating compartment is less than or equal to the refrigeration shutdown temperature R_{off}, proceed to step S312; if the temperature R of the refrigerating compartment is not less than or equal to the refrigeration shutdown temperature R_{off}, return to step S308.

Step S312: Determine whether the temperature F of the freezing compartment is greater than or equal to the most recently determined freezing start temperature Fₒₙ₍ₙ₋₁₎; if the temperature F of the freezing compartment is greater than or equal to the most recently determined freezing start temperature Fₒₙ₍ₙ₋₁₎, proceed to step S314; if the temperature F of the freezing compartment is not greater than or equal to the most recently determined freezing start temperature Fₒₙ₍ₙ₋₁₎, proceed to step S316.

In the step S312, if a current instance is a first time, a most recently determined freezing start temperature Fₒₙ₍₀₎ is a predetermined freezing start temperature.

Step S314: Determine the temperature F of the freezing compartment as a current freezing start temperature Fₒₙ₍ₙ₎, calculate a difference between the temperature F of the freezing compartment and the most recently determined freezing start temperature Fₒₙ₍ₙ₋₁₎, and determine a difference between a most recently determined freezing shutdown temperature F_{off(n-1)} and an absolute value of the difference between the temperature F of the freezing compartment and the most recently determined freezing start temperature Fₒₙ₍ₙ₋₁₎ as a current freezing shutdown temperature F_{off(n)}; and control the freezing capillary tube 170 to conduct, and when the temperature F of the freezing compartment is less than or equal to the current freezing shutdown temperature F_{off(n)}, control the compressor 110 to shut down, and return to step S302.

In the step S314, if a current instance is a first time, a most recently determined freezing shutdown temperature F_{off(0)} is a predetermined freezing shutdown temperature.

Step S316: Determine whether the temperature F of the freezing compartment is less than or equal to the most recently determined freezing shutdown temperature F_{off(n-1)}; if the temperature F of the freezing compartment is less than or equal to the most recently determined freezing shutdown temperature F_{off(n-1)}, proceed to step S318; if the temperature F of the freezing compartment is not less than or equal to the most recently determined freezing shutdown temperature F_{off(n-1)}, proceed to step S320.

Step S318: Determine the temperature F of the freezing compartment as the current freezing shutdown temperature F_{off(n)}, calculate a difference between the temperature F of the freezing compartment and the most recently determined freezing shutdown temperature F_{off(n-1)}, determine a difference between the most recently determined freezing start temperature Fₒₙ₍ₙ₋₁₎ and an absolute value of the difference between the temperature F of the freezing compartment and the most recently determined freezing shutdown temperature F_{off(n-1)} as the current freezing start temperature Fₒₙ₍ₙ₎, control the compressor 110 to shut down, and return to step S302.

Step S320: Control the compressor to shut down, determine the most recently determined freezing shutdown temperature F_{off(n-1)} as the target freezing shutdown temperature, and determine the most recently determined freezing start temperature Fₒₙ₍ₙ₋₁₎ as the target freezing start temperature for the target freezing level.

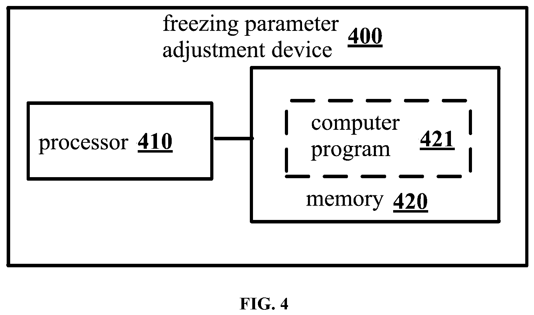

Based on the same inventive concept, the present application also proposes a device for adjusting freezing parameters, i.e., a freezing parameter adjustment device 400. FIG.4 shows a schematic structural diagram of the freezing parameter adjustment device according to an embodiment of the present application. As shown in FIG.4, the freezing parameter adjustment device 400 comprises a memory and a processor 410. The memory 420 stores a computer program 421, which, when executed by the processor 410, implements a method for adjusting freezing parameters of a dual-system refrigerator as described in any of the aforementioned embodiments.

The present application provides a method and device for adjusting freezing parameters of a dual-system refrigerator. In the method provided by the present application, after the compressor 110 is started, and the temperature of the refrigerating compartment is obtained, if the temperature of the refrigerating compartment is less than or equal to the refrigeration shutdown temperature, obtain and determine whether the temperature of the freezing compartment is within a predetermined temperature range related to the target freezing level, with the endpoints of the temperature range being the predetermined freezing shutdown temperature and the predetermined freezing start temperature, separately. If not, the temperature range is expanded according to predetermined rules, and based on the temperature of the freezing compartment, the conduction of the freezing capillary tube 170 and/or the shutdown of the compressor 110 are/is controlled until the temperature of the freezing compartment is less than or equal to the refrigeration shutdown temperature, at which point the temperature of the freezing compartment is within the most recently determined temperature range, and the endpoints of this range are set as the target freezing start temperature and the target freezing shutdown temperature for the target freezing level. This technical solution provided by the present application automatically adjusts the temperature range to determine the target freezing start temperature and the target freezing shutdown temperature for the target freezing level, thereby saving labor and reducing costs.

Furthermore, whenever the temperature of the refrigerating compartment is less than or equal to the refrigeration shutdown temperature and the temperature of the freezing compartment is not within the most recently determined temperature range, the temperature range is expanded based on the temperature of the freezing compartment, thus quickly determining the target freezing shutdown temperature and the target freezing start temperature for the target freezing level.

Additionally, in various embodiments of the present application, functional units can be physically independent or integrated in two or more units, or all functional units can be integrated into a single processing unit. These integrated functional units can be implemented in hardware, software, or firmware form.

Those skilled in art can understand: if an integrated functional unit is implemented in a form of software and sold or used as an independent product, it can be stored in a computer-readable storage medium. Based on this understanding, technical solutions of the present application, in essence, or part of it can be embodied in a form of a software product stored in a storage medium, containing several instructions to make a computing device (such as a personal computer, server, or network device, etc.) execute all or part of steps of the method described in various embodiments of the present application when running the instructions. The aforementioned storage medium comprises various mediums capable of storing program code such as USB flash drives, mobile hard drives, Read-Only Memory (ROM), Random Access Memory (RAM), magnetic disks, or optical disks, among others.

Alternatively, all or part of steps of embodiments of the method can be completed by hardware related to program instructions (such as computing devices of personal computers, servers, or network devices), with the program instructions stored in a computer-readable storage medium. When the program instructions are executed by the processor of the computing device, the computing device executes all or part of the steps of the method described in various embodiments of the present application.

## Claims

1. A method for adjusting freezing parameters in a dual-system refrigerator, **characterized in that** the method for adjusting freezing parameters in a dual-system refrigerator comprises::
obtaining a temperature of a refrigerating compartment after a compressor (110) is activated, and obtaining a temperature of a freezing compartment and determine whether the temperature of the freezing compartment is within a predetermined temperature range related to a target freezing level, where a lower endpoint of the temperature range is a predetermined freezing shutdown temperature and an upper endpoint of the temperature range is a predetermined freezing start temperature, when the temperature of the refrigerating compartment is less than or equal to a refrigeration shutdown temperature;
if the temperature of the freezing compartment is not within the predetermined temperature range related to the target freezing level, expanding the temperature range according to predetermined rules, controlling conduction of a freezing capillary tube (170) and/or shutdown of the compressor (110) based on the temperature of the freezing compartment, until the temperature of the freezing compartment is less than or equal to the refrigeration shutdown temperature, the temperature of the freezing compartment is within a most recently determined temperature range, and determine a lower endpoint of the most recently determined temperature range as a target freezing shutdown temperature for a target freezing level and determine an upper endpoint of the most recently determined temperature range as a target freezing start temperature for the target freezing level.

2. The method for adjusting freezing parameters in a dual-system refrigerator according to claim 1, **characterized in that** a step of expanding the temperature range according to predetermined rules comprises:
expanding the most recently determined temperature range based on the temperature of the freezing compartment when the temperature of the refrigerating compartment is less than or equal to the refrigeration shutdown temperature and the temperature of the freezing compartment is not within the most recently determined temperature range.

3. The method for adjusting freezing parameters in a dual-system refrigerator according to claim 2, **characterized in that** a step of expanding the most recently determined temperature range based on the temperature of the freezing compartment comprises:
increasing a most recently determined freezing start temperature and decreasing a most recently determined freezing shutdown temperature based on the temperature of the freezing compartment.

4. The method for adjusting freezing parameters in a dual-system refrigerator according to claim 3, **characterized in that** a step of increasing a most recently determined freezing start temperature and decreasing a most recently determined freezing shutdown temperature based on the temperature of the freezing compartment comprises:
determining the temperature of the freezing compartment as a current freezing start temperature if the temperature of the freezing compartment is greater than or equal to the most recently determined freezing start temperature, and decreasing the most recently determined freezing shutdown temperature according to the temperature of the freezing compartment and the most recently determined freezing start temperature to obtain a current freezing shutdown temperature;
determining the temperature of the freezing compartment as a current freezing shutdown temperature if the temperature of the freezing compartment is less than or equal to the most recently determined freezing shutdown temperature, and increasing the most recently determined freezing start temperature according to the temperature of the freezing compartment and the most recently determined freezing shutdown temperature to obtain a current freezing start temperature.

5. The method for adjusting freezing parameters in a dual-system refrigerator according to claim 4, **characterized in that** a step of decreasing the most recently determined freezing shutdown temperature according to the temperature of the freezing compartment and the most recently determined freezing start temperature to obtain a current freezing shutdown temperature comprises:
determining the current freezing shutdown temperature according to F_{off(n)}=F_{off(n-1)}- | F-Fₒₙ₍ₙ₋₁₎ | ,
where F_{off(n)} is a freezing shutdown temperature for an nth instance, F_{off(n-1)} is a determined freezing shutdown temperature for an (n-1)th instance, F is the temperature of the freezing compartment, and Fₒₙ₍ₙ₋₁₎ is a determined freezing start temperature for an (n-1)th instance.

6. The method for adjusting freezing parameters in a dual-system refrigerator according to claim 4, **characterized in that** a step of increasing the most recently determined freezing start temperature according to the temperature of the freezing compartment and the most recently determined freezing shutdown temperature to obtain a current freezing start temperature comprises:
determining the current freezing start temperature according to Fₒₙ₍ₙ₎₌Fₒₙ₍ₙ₋₁₎+ | F- F_{off(n-1)} | ,
where Fₒₙ₍ₙ₎ is a freezing start temperature for an nth instance, Fₒₙ₍ₙ₋₁₎ is a determined freezing start temperature for an (n-1)th instance, F is the temperature of the freezing compartment, and F_{off(n-1)} is a determined freezing shutdown temperature for an (n-1)th instance.

7. The method for adjusting freezing parameters in a dual-system refrigerator according to any one of claims 1-6, **characterized in that** a step of controlling conduction of a freezing capillary tube (170) and/or shutdown of the compressor (110) based on the temperature of the freezing compartment comprises:
if the temperature of the freezing compartment is greater than or equal to the most recently determined freezing shutdown temperature, conducting the freezing capillary tube (170) until the temperature of the freezing compartment is less than the determined current freezing shutdown temperature, and shutting down the compressor (110); and
if the temperature of the freezing compartment is less than or equal to the most recently determined freezing start temperature, shutting down the compressor (110).

8. The method for adjusting freezing parameters in a dual-system refrigerator according to any one of claims 1-6, **characterized in that** conditions for starting the compressor (110) comprise:
the temperature of the refrigerating compartment being greater than or equal to a refrigeration start temperature; or
the temperature of the refrigerating compartment being between a refrigeration start temperature and the refrigeration shutdown temperature, and the temperature of the freezing compartment being greater than or equal to the most recently determined freezing start temperature.

9. The method for adjusting freezing parameters in a dual-system refrigerator according to any one of claims 1-6, **characterized in that**
a step of obtaining a temperature of a refrigerating compartment comprises: obtaining a temperature of the refrigerating compartment detected by a temperature detection device set inside the refrigerating compartment; and
a step of obtaining a temperature of a freezing compartment comprises: obtaining a temperature of the freezing compartment detected by a freezing temperature detection device set inside the freezing compartment.

10. A device (400) for adjusting freezing parameters, **characterized in that** the device for adjusting freezing parameters comprises a memory (420) and a processor (410), wherein the memory (420) stores a computer program (421), which, when executed by the processor (410), implements a method for adjusting freezing parameters of a dual-system refrigerator according to any one of claims 1-9.

## Patentansprüche

1. Verfahren zum Anpassen von Gefrierparametern in einem Zweisystem-Kühlschrank, **dadurch gekennzeichnet, dass** das Verfahren zum Anpassen von Gefrierparametern in einem Zweisystem-Kühlschrank die folgenden Schritte umfasst:
Erfassen einer Temperatur eines Kühlfachs, nachdem ein Kompressor (110) aktiviert wurde, und Erfassen einer Temperatur eines Gefrierfachs, und Bestimmen, ob die Temperatur des Gefrierfachs innerhalb eines vorbestimmten Temperaturbereichs liegt, der sich auf einen Soll-Gefriergrad bezieht, wobei ein unterer Endpunkt des Temperaturbereichs eine vorbestimmte Gefrierabschalttemperatur ist und ein oberer Endpunkt des Temperaturbereichs eine vorbestimmte Gefrierstarttemperatur ist, wenn die Temperatur des Kühlfachs kleiner oder gleich einer Kühlabschalttemperatur ist;
wenn die Temperatur des Gefrierfachs nicht innerhalb des vorbestimmten Temperaturbereichs liegt, der sich auf den Soll-Gefriergrad bezieht, Erweitern des Temperaturbereichs gemäß vorbestimmten Regeln, Steuern einer Leitung einer Gefrierkapillarleitung (170) und/oder Abschalten des Kompressors (110) basierend auf der Temperatur des Gefrierfachs, bis die Temperatur des Gefrierfachs kleiner oder gleich der Kühlabschalttemperatur ist, wobei die Temperatur des Gefrierfachs innerhalb eines zuletzt bestimmten Temperaturbereichs liegt, und Bestimmen eines unteren Endpunkts des zuletzt bestimmten Temperaturbereichs als eine Soll-Gefrierabschalttemperatur für einen Soll-Gefriergrad und Bestimmen eines oberen Endpunkts des zuletzt bestimmten Temperaturbereichs als eine Soll-Gefrierstarttemperatur für den Soll-Gefriergrad.

2. Verfahren zum Anpassen von Gefrierparametern in einem Zweisystem-Kühlschrank nach Anspruch 1, **dadurch gekennzeichnet, dass** der Schritt des Erweiterns des Temperaturbereichs gemäß vorbestimmten Regeln den folgenden Schritt umfasst:
Erweitern des zuletzt bestimmten Temperaturbereichs basierend auf der Temperatur des Gefrierfachs, wenn die Temperatur des Kühlfachs kleiner oder gleich der Kühlabschalttemperatur ist und die Temperatur des Gefrierfachs nicht innerhalb des zuletzt bestimmten Temperaturbereichs liegt.

3. Verfahren zum Anpassen von Gefrierparametern in einem Zweisystem-Kühlschrank nach Anspruch 2, **dadurch gekennzeichnet, dass** der Schritt des Erweiterns des zuletzt bestimmten Temperaturbereichs basierend auf der Temperatur des Gefrierfachs den folgenden Schritt umfasst:
Erhöhen einer zuletzt bestimmten Gefrierstarttemperatur und ein Verringern einer zuletzt bestimmten Gefrierabschalttemperatur basierend auf der Temperatur des Gefrierfachs.

4. Verfahren zum Anpassen von Gefrierparametern in einem Zweisystem-Kühlschrank nach Anspruch 3, **dadurch gekennzeichnet, dass** der Schritt des Erhöhens einer zuletzt bestimmten Gefrierstarttemperatur und Verringerns einer zuletzt bestimmten Gefrierabschalttemperatur basierend auf der Temperatur des Gefrierfachs die folgenden Schritte umfasst:
Bestimmen der Temperatur des Gefrierfachs als eine aktuelle Gefrierstarttemperatur, wenn die Temperatur des Gefrierfachs größer oder gleich der zuletzt bestimmten Gefrierstarttemperatur ist, und Verringern der zuletzt bestimmten Gefrierabschalttemperatur gemäß der Temperatur des Gefrierfachs und der zuletzt bestimmten Gefrierstarttemperatur, um eine aktuelle Gefrierabschalttemperatur zu erhalten;
Bestimmen der Temperatur des Gefrierfachs als eine aktuelle Gefrierabschalttemperatur, wenn die Temperatur des Gefrierfachs kleiner oder gleich der zuletzt bestimmten Gefrierabschalttemperatur ist, und Erhöhen der zuletzt bestimmten Gefrierstarttemperatur gemäß der Temperatur des Gefrierfachs und der zuletzt bestimmten Gefrierabschalttemperatur, um eine aktuelle Gefrierstarttemperatur zu erhalten.

5. Verfahren zum Anpassen von Gefrierparametern in einem Zweisystem-Kühlschrank nach Anspruch 4, **dadurch gekennzeichnet, dass** der Schritt des Verringerns der zuletzt bestimmten Gefrierabschalttemperatur gemäß der Temperatur des Gefrierfachs und der zuletzt bestimmten Gefrierstarttemperatur, um eine aktuelle Gefrierabschalttemperatur zu erhalten, den folgenden Schritt umfasst:
Bestimmen der aktuellen Gefrierabschalttemperatur gemäß F_{off(n)}=F_{off(n-1)}- | F-Fₒₙ₍ₙ₋₁₎ I ,
wobei F_{off(n)} eine Gefrierabschalttemperatur für eine n-te Instanz ist, F_{off(n-1)} eine bestimmte Gefrierabschalttemperatur für eine (n-1)-te Instanz ist, F die Temperatur des Gefrierfachs ist und Fₒₙ₍ₙ₋₁₎ eine bestimmte Gefrierstarttemperatur für eine (n-1)-te Instanz ist.

6. Verfahren zum Anpassen von Gefrierparametern in einem Zweisystem-Kühlschrank nach Anspruch 4, **dadurch gekennzeichnet, dass** der Schritt des Erhöhens der zuletzt bestimmten Gefrierstarttemperatur gemäß der Temperatur des Gefrierfachs und der zuletzt bestimmten Gefrierabschalttemperatur, um eine aktuelle Gefrierstarttemperatur zu erhalten, den folgenden Schritt umfasst:
Bestimmen der aktuellen Gefrierstarttemperatur gemäß Fₒₙ₍ₙ₎=Fₒₙ₍ₙ₋₁₎+ | F- F_{off(n-1)} | ,
wobei Fₒₙ₍ₙ₎ eine Gefrierstarttemperatur für eine n-te Instanz ist, Fₒₙ₍ₙ₋₁₎ eine bestimmte Gefrierstarttemperatur für eine (n-1)-te Instanz ist, F die Temperatur des Gefrierfachs ist und F_{off(n-1)} eine bestimmte Gefrierabschalttemperatur für eine (n-1)-te Instanz ist.

7. Verfahren zum Anpassen von Gefrierparametern in einem Zweisystem-Kühlschrank nach einem der Ansprüche 1 bis 6, **dadurch gekennzeichnet, dass** der Schritt des Steuerns der Leitung einer Gefrierkapillarleitung (170) und/oder Abschaltens des Kompressors (110) basierend auf der Temperatur des Gefrierfachs die folgenden Schritte umfasst:
wenn die Temperatur des Gefrierfachs größer oder gleich der zuletzt bestimmten Gefrierabschalttemperatur ist, Leiten der Gefrierkapillarleitung (170), bis die Temperatur des Gefrierfachs kleiner als die bestimmte aktuelle Gefrierabschalttemperatur ist, und Abschalten des Kompressors (110); und
wenn die Temperatur des Gefrierfachs kleiner oder gleich der zuletzt bestimmten Gefrierstarttemperatur ist, Abschalten des Kompressors (110).

8. Verfahren zum Anpassen von Gefrierparametern in einem Zweisystem-Kühlschrank nach einem der Ansprüche 1 bis 6, **dadurch gekennzeichnet, dass** Bedingungen zum Starten des Kompressors (110) umfassen:
dass die Temperatur des Kühlfachs größer oder gleich einer Kühlstarttemperatur ist; oder
dass die Temperatur des Kühlfachs zwischen einer Kühlstarttemperatur und der Kühlabschalttemperatur liegt, und dass die Temperatur des Gefrierfachs größer oder gleich der zuletzt bestimmten Gefrierstarttemperatur ist.

9. Verfahren zum Anpassen von Gefrierparametern in einem Zweisystem-Kühlschrank nach einem der Ansprüche 1 bis 6, **dadurch gekennzeichnet, dass**
der Schritt des Erfassens einer Temperatur eines Kühlfachs Erfassen einer Temperatur des Kühlfachs umfasst, die von einer Temperaturerfassungsvorrichtung erfasst wird, die innerhalb des Kühlfachs angeordnet ist; und
der Schritt des Erfassens einer Temperatur eines Gefrierfachs Erfassen einer Temperatur des Gefrierfachs umfasst, die von einer Gefriertemperaturerfassungsvorrichtung erfasst wird, die innerhalb des Gefrierfachs angeordnet ist.

10. Vorrichtung (400) zum Anpassen von Gefrierparametern, **dadurch gekennzeichnet, dass** die Vorrichtung zum Anpassen von Gefrierparametern einen Speicher (420) und einen Prozessor (410) aufweist, wobei der Speicher (420) ein Computerprogramm (421) speichert, das ein Verfahren zum Anpassen von Gefrierparametern eines Zweisystem-Kühlschranks nach einem der Ansprüche 1-9 implementiert, wenn es von dem Prozessor (410) ausgeführt wird.

## Revendications

1. Procédé de réglage des paramètres de congélation dans un réfrigérateur à double système, **caractérisé en ce que** le procédé de réglage des paramètres de congélation dans un réfrigérateur à double système comprend :
l'obtention d'une température d'un compartiment de réfrigération après l'activation d'un compresseur (110), et l'obtention d'une température d'un compartiment de congélation et la détermination si la température du compartiment de congélation est dans une plage de température prédéterminée liée à un niveau de congélation cible, où un point d'extrémité inférieur de la plage de température est une température d'arrêt de congélation prédéterminée et un point d'extrémité supérieur de la plage de température est une température de début de congélation prédéterminée, lorsque la température du compartiment de réfrigération est inférieure ou égale à une température d'arrêt de réfrigération ;
si la température du compartiment de congélation n'est pas dans la plage de température prédéterminée liée au niveau de congélation cible, l'élargissement de la plage de température selon des règles prédéterminées, la commande de la conduction d'un tube capillaire de congélation (170) et/ou l'arrêt du compresseur (110) en fonction de la température du compartiment de congélation, jusqu'à ce que la température du compartiment de congélation soit inférieure ou égale à la température d'arrêt de réfrigération, la température du compartiment de congélation se situe dans une plage de température la plus récemment déterminée, et la détermination d'un point final inférieur de la plage de température la plus récemment déterminée comme température d'arrêt de congélation cible pour un niveau de congélation cible et la détermination d'un point final supérieur de la plage de température la plus récemment déterminée comme température de début de congélation cible pour le niveau de congélation cible.

2. Procédé de réglage des paramètres de congélation dans un réfrigérateur à double système selon la revendication 1, **caractérisé en ce qu'**une étape d'élargissement de la plage de température selon des règles prédéterminées comprend :
l'élargissement de la plage de température la plus récemment déterminée en fonction de la température du compartiment de congélation lorsque la température du compartiment de réfrigération est inférieure ou égale à la température d'arrêt de réfrigération et que la température du compartiment de congélation n'est pas dans la plage de température la plus récemment déterminée.

3. Procédé de réglage des paramètres de congélation dans un réfrigérateur à double système selon la revendication 2, **caractérisé en ce qu'**une étape d'élargissement de la plage de température la plus récemment déterminée en fonction de la température du compartiment de congélation comprend :
l'augmentation d'une température de début de congélation récemment déterminée et la diminution d'une température d'arrêt de congélation récemment déterminée en fonction de la température du compartiment de congélation.

4. Procédé de réglage des paramètres de congélation dans un réfrigérateur à double système selon la revendication 3, **caractérisé en ce qu'**une étape d'augmentation de la température de début de congélation la plus récemment déterminée et de diminution de la température d'arrêt de congélation la plus récemment déterminée en fonction de la température du compartiment de congélation comprend :
la détermination de la température du compartiment de congélation comme température de début de congélation actuelle si la température du compartiment de congélation est supérieure ou égale à la température de début de congélation la plus récemment déterminée, et la diminution de la température d'arrêt de congélation la plus récemment déterminée en fonction de la température du compartiment de congélation et de la température de début de congélation la plus récemment déterminée pour obtenir une température d'arrêt de congélation actuelle ;
la détermination de la température du compartiment de congélation comme température d'arrêt de congélation actuelle si la température du compartiment de congélation est inférieure ou égale à la température d'arrêt de congélation la plus récemment déterminée, et l'augmentation de la température de début de congélation la plus récemment déterminée en fonction de la température du compartiment de congélation et de la température d'arrêt de congélation la plus récemment déterminée pour obtenir une température de début de congélation actuelle.

5. Procédé de réglage des paramètres de congélation dans un réfrigérateur à double système selon la revendication 4, **caractérisé en ce qu'**une étape de diminution de la dernière température d'arrêt de congélation déterminée en fonction de la température du compartiment de congélation et de la dernière température de début de congélation déterminée pour obtenir une température d'arrêt de congélation actuelle comprend :
la détermination de la température d'arrêt de congélation actuelle selon F_{off(n)} = F_{off(n-1)}- |F - Fₒₙ₍ₙ₋₁₎ |,
où F_{off(n)} est une température d'arrêt de congélation pour une n-ième instance, F_{off(n-1)} est une température d'arrêt de congélation déterminée pour une (n-1)ième instance, F est la température du compartiment de congélation et Fₒₙ₍ₙ₋₁₎ est une température de début de congélation déterminée pour une (n-1)ième instance.

6. Procédé de réglage des paramètres de congélation dans un réfrigérateur à double système selon la revendication 4, **caractérisé en ce qu'**une étape d'augmentation de la dernière température de début de congélation déterminée en fonction de la température du compartiment de congélation et de la dernière température d'arrêt de congélation déterminée pour obtenir une température de début de congélation actuelle comprend :
la détermination de la température actuelle de début de congélation selon Fₒₙ₍ₙ₎=Fₒₙ₍ₙ₋₁₎+ |F - F_{off(n-1)} |,
où Fₒₙ₍ₙ₎ est une température de début de congélation pour une n-ième instance, Fₒₙ₍ₙ₋₁₎ est une température de début de congélation déterminée pour une (n-1)ième instance, F est la température du compartiment de congélation et F_{off(n-1)} est une température d'arrêt de congélation déterminée pour une (n-1)ième instance.

7. Procédé de réglage des paramètres de congélation dans un réfrigérateur à double système selon l'une quelconque des revendications 1-6, **caractérisé en ce qu'**une étape de commande de la conduction d'un tube capillaire de congélation (170) et/ou l'arrêt du compresseur (110) en fonction de la température du compartiment de congélation comprend :
si la température du compartiment de congélation est supérieure ou égale à la température d'arrêt de congélation la plus récemment déterminée, la conduction du tube capillaire de congélation (170) jusqu'à ce que la température du compartiment de congélation soit inférieure à la température d'arrêt de congélation actuelle déterminée, et l'arrêt du compresseur (110) ; et
si la température du compartiment de congélation est inférieure ou égale à la température de début de congélation la plus récemment déterminée, l'arrêt du compresseur (110).

8. Procédé de réglage des paramètres de congélation dans un réfrigérateur à double système selon l'une quelconque des revendications 1-6, **caractérisé en ce que** les conditions de démarrage du compresseur (110) comprennent :
la température du compartiment de réfrigération étant supérieure ou égale à une température de début de réfrigération ; ou
la température du compartiment de réfrigération étant comprise entre une température de début de réfrigération et la température d'arrêt de réfrigération, et la température du compartiment de congélation étant supérieure ou égale à la température de début de congélation la plus récemment déterminée.

9. Procédé de réglage des paramètres de congélation dans un réfrigérateur à double système selon l'une quelconque des revendications 1-6, **caractérisé en ce que**
une étape d'obtention d'une température d'un compartiment de réfrigération comprend : l'obtention d'une température du compartiment de réfrigération détectée par un dispositif de détection de température placé à l'intérieur du compartiment de réfrigération ; et
une étape d'obtention d'une température d'un compartiment de congélation comprend : l'obtention d'une température du compartiment de congélation détectée par un dispositif de détection de température de congélation disposé à l'intérieur du compartiment de congélation.

10. Dispositif (400) de réglage de paramètres de congélation, **caractérisé en ce que** le dispositif de réglage de paramètres de congélation comprend une mémoire (420) et un processeur (410), dans lequel la mémoire (420) stocke un programme informatique (421) qui, lorsqu'il est exécuté par le processeur (410), met en œuvre un procédé de réglage de paramètres de congélation d'un réfrigérateur à double système selon l'une quelconque des revendications 1-9.
